# EUROPÄISCHE PATENTSCHRIFT

(11) **EP 1 400 432 B1**
(45) Veröffentlichungstag und Bekanntmachung des Hinweises auf die Patenterteilung: **04.03.2009**
(21) Anmeldenummer: 03014891.0
(22) Anmeldetag: 01.07.2003
(51) Int. Cl.: B62D 1/187, B62D 1/18, B60R 21/05

(54) **Flexible Spaltabdeckung zwischen einer verstellbaren Lenksäule eines Kraftfahrzeuges und einer Armaturentafel**
Flexible gap cover between an adjustable steering column of a vehicle and a dash board
Recouvrement flexible de l'espace situé entre la colonne de direction réglable d'un véhicule et le tableau de bord

(30) Priorität: 17.09.2002 DE 10242966
(43) Veröffentlichungstag der Anmeldung: 24.03.2004
(73) Patentinhaber: Dr. Ing. h.c. F. Porsche Aktiengesellschaft, 70435 Stuttgart (DE)
(72) Erfinder: Gayer, Bernd, 71287 Weissach (DE); Brüning, Thomas, 71282 Hemmingen (DE); Frank, Martin, 75417 Mühlacker (DE)

(56) Entgegenhaltungen:
- DE-A- 19 525 181
- DE-C1- 3 728 457
- DE-U- 20 017 192

## Beschreibung

Die Erfindung betrifft eine flexible Spaltabdeckung zwischen einer verstellbaren Lenksäule eines Kraftfahrzeuges und einer Armaturentafel gemäß den Merkmalen des Oberbegriffs des Patentanspruchs 1. Dieser Merkmale sind aus DE 200 17 192 U1 bekannt.

Aus der DE 195 25 181 A1 geht eine flexible Spaltabdeckung zwischen einer flexiblen Lenksäule eines Kraftfahrzeuges und einer Armaturentafel hervor, wobei die einteilig ausgebildete rahmenartige Spaltabdeckung einerseits an der Lenksäulenverkleidung und andererseits an der Armaturentafel befestigt ist. Die Montage dieser einstückigen Spaltabdeckung an der Lenksäulenverkleidung und an der Armaturentafel ist aufgrund der beengten Platzverhältnisse im Spaltbereich schwierig und zeitintensiv.

Aufgabe der Erfindung ist es, eine flexible Spaltabdeckung zwischen einer verstellbaren Lenksäule eines Kraftfahrzeuges und einer Armaturentafel so weiterzubilden, daß sie einen großen Verstellbereich der Lenksäule ermöglicht, einfach montierbar ist und zudem eine ansprechende Optik aufweist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß sich die aus einem oberen Abdeckteil und einem unteren Abdeckteil bestehende flexible Spaltabdeckung schnell und einfach montieren läßt. Durch die zweiteilige Ausbildung des oberen Abdeckteils und die Anordnung von zumindest einem Zugelement werden beide Teile des oberen Abdeckteils in allen Stellungen der Lenksäule gespannt, so daß die Teile eine optisch ansprechende faltenarme Spannlage einnehmen. Beide Abdeckteile der flexiblen Spaltabdeckung können mit einem Ende entweder an der Armaturentafel oder der Lenksäulenverkleidung vormontiert sein, wogegen das andere Ende über eine lösbare Befestigung festlegbar ist. Durch die flexible Spaltabdeckung wird darüber hinaus eine schalldämmende Wirkung erzielt und es kann kein Schmutz durch die Aussparung hindurchdringen. Die flexible Spaltabdeckung läßt große Verstellbewegungen der Lenksäule zu und wird durch das zumindest eine Zugelement in einer gestrafften faltenarmen Spannlage gehalten.

Ein Ausführungsbeispiel der Erfindung wird anhand einer Zeichnung näher erläutert.

) Es zeigen
- Fig. 1: eine Ansicht von schräg vorne auf die Armaturentafel eines Fahrzeuges mit einer Aussparung zum Hindurchführen einer Lenksäule sowie eine Lenksäulenverkleidung,

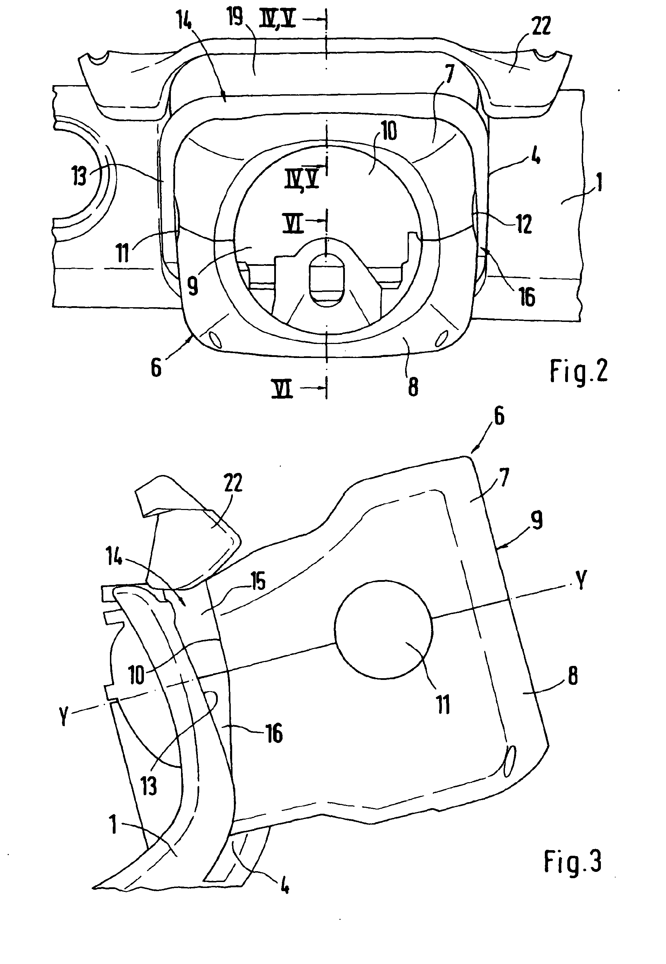

- Fig. 2: eine Teilansicht von vorne auf die Armaturentafel, die Lenksäulenverkleidung und eine flexible Spaltabdeckung zwischen der Lenksäulenverkleidung und der Armaturentafel,
- Fig. 3: eine Ansicht von seitlich außen auf die Armaturentafel, die Lenksäulenverkleidung und die Spaltabdeckung
- Fig. 4: einen Schnitt nach der Linie III-III der Fig. 2,
- Fig. 5: einen Schnitt ähnlich Fig. 4 mit einer zweiten Ausführungsform zur Befestigung des Zugeelements,
- Fig. 6: einen Schnitt nach der Linie VI-VI der Fig. 2.

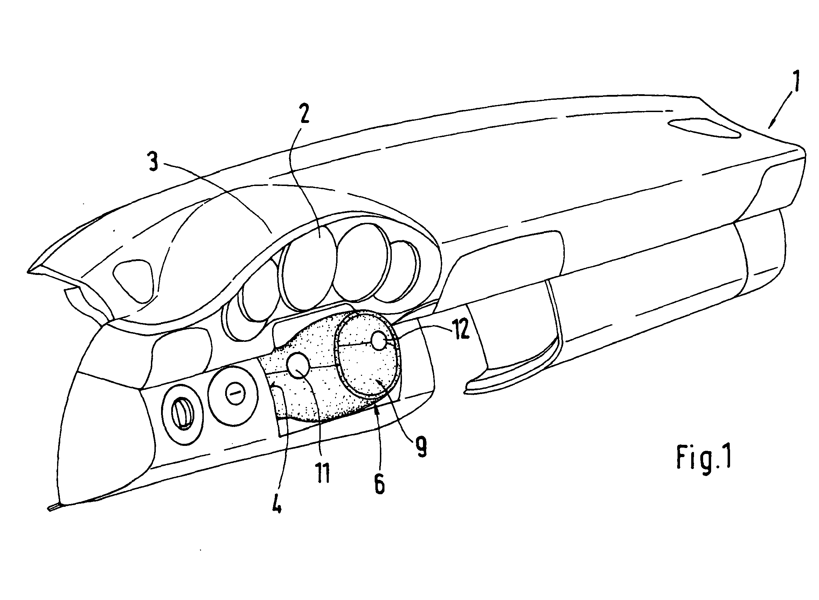

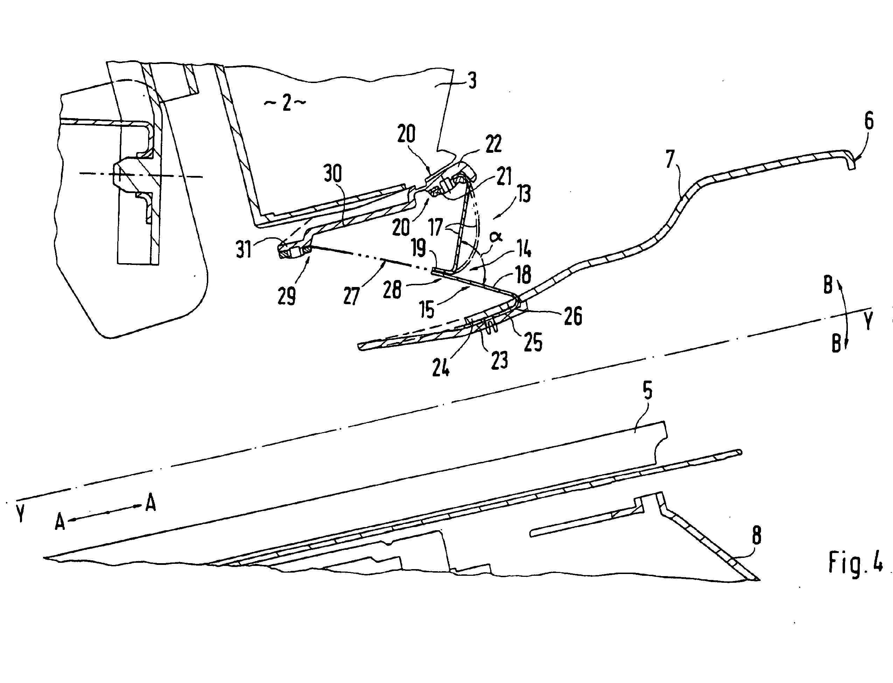

Fig. 1 zeigt einen Teilbereich einer Armaturentafel 1, wobei im Bereich des Fahrers 5 unterhalb einer Instrumente 2 aufnehmenden Hutze 3 eine Aussparung 4 vorgesehen ist, durch die eine an ihrem oberen Ende mit einem nicht näher dargestellten Lenkrad verbundene Lenksäule 5 hindurchgeführt ist. Die Lenksäule 5 durchdringt die Aussparung 4 in der Armaturentafel 1 und ist in axialer Richtung (Pfeile A) sowie in der Höhe (Pfeile B) verstellbar (Fig 4). Bei der Verstellung der Lenksäule 5 in der Höhe schwenkt der verstellbare Bereich der Lenksäule 5 mit dem Lenkrad um eine nicht dargestellte, nahe der Aussparung 4 befindliche Drehachse.

Die Lenksäule 5 ist angrenzend an das Lenkrad zum Fahrgastraum hin mit einer Lenksäulenverkleidung 6 versehen, die sich aus einer Oberschale 7 und einer Unterschale 8 zusammensetzt. Oberschale 7 und Unterschale 8 sind entlang einer Lenksäulenmittelebene Y-Y aneinandergesetzt und miteinander sowie mit der innenliegenden Lenksäule 5 lösbar verbunden. Die Lenksäulenverkleidung 6 weist vorne und hinten Öffnungen 9, 10 zum Durchtritt der Lenksäule 5 auf. An den Seitenflächen der Lenksäulenverkleidung 6 sind Ausnehmungen 11, 12 für einen Blink- bzw. Wischhebel vorgesehen. Bei einer Verstellbewegung der Lenksäule 5 bewegt sich die Lenksäulenverkleidung 6 mit der verstellbaren Lenksäule 4 mit und ein umlaufender Spalt 13 zwischen der Lenksäulenverkleidung 6 und der Aussparung 4 der Armaturentafel 1 ändert sich.

Zur Verkleidung des veränderlichen Spaltes 13 ist eine flexible Spaltabdeckung 14 vorgesehen, die aus einem biegsamen, faltbaren Werkstoff wie Leder, Kunstleder oder dgl. gefertigt ist.

Die flexible Spaltabdeckung 14 umfaßt ein oberes Abdeckteil 15 und ein unteres Abdeckteil 16, wobei die Trennung zwischen beiden Abdeckteilen 15, 16 im Bereich der Lenksäulenmittelebene Y-Y liegt. Das obere Abdeckteil 15 besteht aus zwei - in Höhenrichtung gesehen - übereinanderliegend angeordneten Teilen 17, 18 aus biegsamen faltbarem Werkstoff, die in einem gemeinsamen überlappenden Bereich 19 vernäht, verklebt oder anderweitig miteinander verbunden sind. Das obere Teil 17 des Abdeckteils 15 ist mit seinem entfernt vom überlappenden Bereich 19 liegenden Rand 20 unter Zwischenschaltung eines Haltebügels 21 an einer Brücke 22 der Armaturentafel 1 in Lage gehalten. Ein umgebogener Randbereich des oberen Teiles 17 ist dabei zwischen der Unterseite der Brücke 22 und dem Haltebügel 21 festgeklemmt, wobei der Haltebügel 21 durch Schweißen, Klipsen oder dgl. an der Brücke 22 festlegbar ist. Die Brücke 22 ist mit dem darunterliegenden Armaturenbrett 1 lösbar verbunden. Das untere Teil 18 des Abdeckteils 15 ist mit seinem entfernt vom überlappenden Bereich 19 liegenden Rand 23 mittels eines etwa U-förmigen Spannrahmens 24 an der Außenseite der Oberschale 7 der Lenksäulenverkleidung 5 befestigt. Auch hier wird ein umgebogener Randbereich des unteren Teils 18 zwischen der Außenseite der Oberschale 7 und dem Spannrahmen 24 festgeklemmt. Der Spannrahmen ist durch Klipsen, Schweißen oder dgl. an der Oberschale 7 der Lenksäulenverkleidung 6 befestigbar.

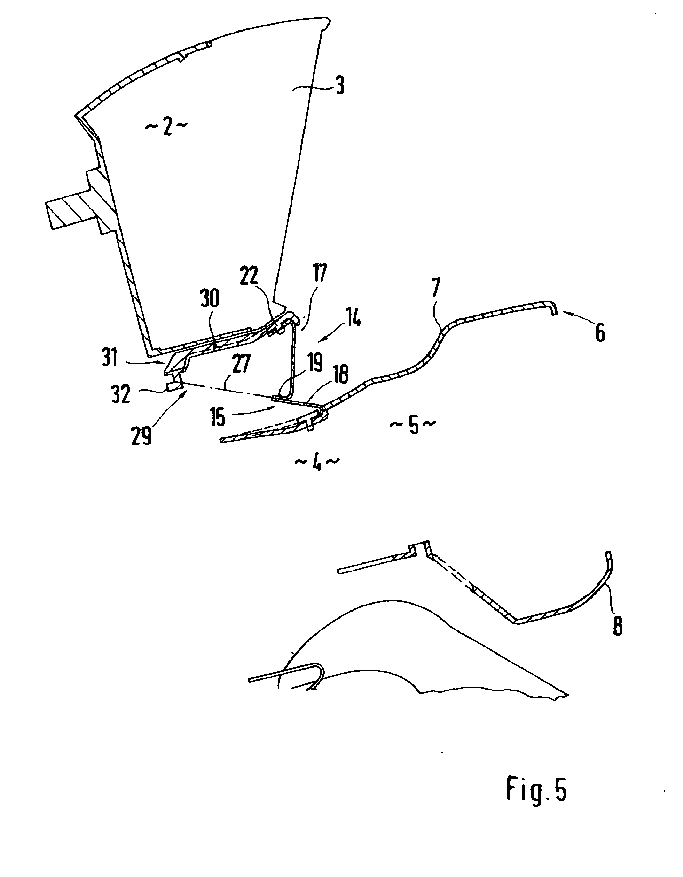

Gemäß Fig. 4 weist die Oberschale 7 im Befestigungsbereich für das obere Abdeckteil 15 eine zurückversetzte Einprägung 26 auf. Das obere Abdeckteil 15 wird durch zumindest ein Zugelement 27 beaufschlagt. Ein Ende 28 des Zugelementes 27 ist an den gemeinsamen überlappenden Bereich 19 beider Teile 17, 18 angeschlossen, wogegen das andere Ende 29 des Zugelements 27 mit dem freien Ende 31 eines angeformten Haltearms 30 der Brücke 22 lösbar verbunden ist. Vorzugsweise sind an der Brücke 22 in Querrichtung gesehen zwei mit Abstand zueinander angeordnete Haltearme 30 vorgesehen, an denen jeweils ein Zugelement 27 befestigbar ist. Ein nach unten ragender Haken 32 jedes Haltearms 30 dient zum Festlegen des Endes 29 des Zugelements 27. Das Ende 29 des Zugelements 27 weist eine Öffnung auf, die ein Einhaken des Zugelements 27 am Haken 32 des Haltearms 30 ermöglicht (Fig. 5). Das Zugelement (27) wird im Ausführungsbeispiel durch ein flexibles Gummiband gebildet.

Bei hochgeschwenkter, nicht ausgefahrener Lenksäule 5 verlaufen die beiden Teile 17, 18 des oberen Abdeckteils 15 abschnittsweise unmittelbar übereinanderliegend und werden durch das Zugelement 27 gespannt. Wird die Lenksäule 5 nach unten bzw. zum Fahrer hin bewegt, so verlaufen die beiden Teile 17, 18 des oberen Abdeckteils 15 unter einem Winkel α zueinander, wobei beide Teile 17, 18 des oberen Abdeckteils 15 durch das gedehnte Zugelement 27 gespannt werden und eine annähernd gestreckte Position einnehmen (s. Figur 4). Das Teil 17 des oberen Abdeckteils kann gem. Fig. 4 jedoch auch einen leicht gebogenen Formverlauf aufweisen (strichpunktiert dargestellt).

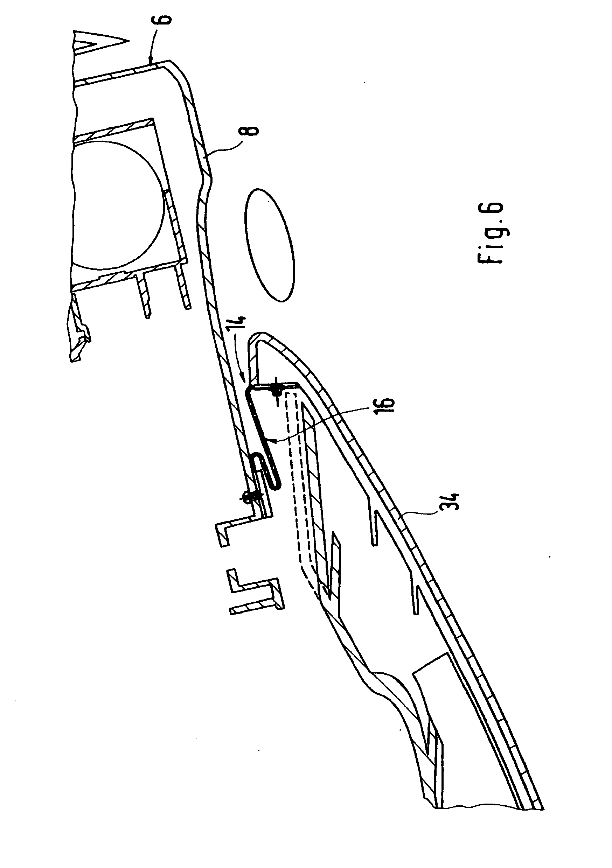

Das einteilige untere Abdeckteil 16 ist einerseits mittels zumindest eines eingelegten Spannrahmens 33 gegen die Außenseite der Unterschale 8 der Lenksäulenverkleidung 6 gespannt und ist durch Kleben, Klipsen, Schweißen oder dgl. an dieser befestigt. Der andere Randbereich des unteren Abdeckteils 16 ist in ähnlicher Weise örtlich am Armaturentafelunterteil 34 in Lage gehalten (s. Fig. 6).

## Patentansprüche

1. Flexible Spaltabdeckung (14) zwischen einer verstellbaren Lenksäule (5) eines Kraftfahrzeuges und einer Armaturentafel (1), wobei die Lenksäule (5) eine Aussparung (4) in der Armaturentafel (1) durchdringt und angrenzend an ein Lenkrad mit einer Lenksäulenverkleidung (6) versehen ist und die Spaltabdeckung (14) einerseits an der Lenksäulenverkleidung (6) und andererseits an der Armaturentafel (1) befestigt ist, **dadurch gekennzeichnet, dass** die Spaltenabdeckung (14) ein oberes Abdeckteil (15) und ein unteres Abdeckteil (16) umfasst, dass das obere Abdeckteil (15) aus zwei übereinander liegend angeordneten Teilen (17, 18) besteht, die in einem gemeinsamen überlappenden Bereich (19) miteinander vernäht und/oder verklebt sind und dass am überlappenden Bereich (19) auf der dem Fahrgastraum abgekehrten Seite zumindest ein Zugelement (27) angreift, dessen eines Ende (28) an den gemeinsamen überlappenden Bereich (19) beider Teile (17), (18) angeschlossen ist, wogegen das andere Ende (29) des Zugelements 27 mit dem freien Ende (31) eines angeformten Haltearms (30) einer am Armaturenbrett (1) befestigte Brücke (22) lösbar verbunden ist.

2. Flexible Spaltabdeckung nach Anspruch 1, **dadurch gekennzeichnet, dass** das obere Abdeckteil (15) an der querverlaufenden Brücke (22) der Armaturentafel (1) und an einer Oberschale (7) der Lenksäulenverkleidung (6) befestigt ist.

3. Flexible Spaltabdeckung nach Anspruch 1, **dadurch gekennzeichnet, dass** das untere Abdeckteil (16) an einer Unterschale (8) der Lenksäulenverkleidung (6) und am Armaturentafelunterteil (34) in Lage gehalten ist.

4. Flexible Spaltabdeckung nach einem der vorhergehenden Ansprüche, **dadurch gekennzeichnet, dass** das wenigstens eine Zugelement (27) durch ein flexibles Gummiband gebildet wird.

5. Flexible Spaltabdeckung nach einem der vorhergehenden Ansprüche, **dadurch gekennzeichnet, dass** am oberen Abdeckteil (15) zumindest zwei in Querrichtung gesehen mit Abstand zueinander angeordnete Zugelemente (27) angreifen.

6. Flexible Spaltabdeckung nach Anspruch 1, **dadurch gekennzeichnet, dass** der zumindest eine Haltearm (30) einstückig mit der Brücke (22) ausgebildet ist.

7. Flexible Spaltabdeckung nach einem der vorhergehenden Ansprüche, **dadurch gekennzeichnet, dass** jeder Haltearm (30) an seinem freien Ende eine nach unten ragenden angeformten Haken (32) aufweist, in den ein mit einer Öffnung versehener Randbereich des Zugelementes (27) einhängbar ist.

8. Flexible Spaltabdeckung nach einem der vorhergehenden Ansprüche **dadurch gekennzeichnet, dass** bei hochgeschwenkter nicht ausgezogener Lenksäule (5) beide Teile (17, 18) des oberen Abdeckteils (15) bereichsweise unmittelbar übereinander liegen und durch das zumindest eine Zugelement (27) gespannt sind.

9. Flexible Spaltabdeckung nach einem der vorhergehenden Ansprüche, **dadurch gekennzeichnet, dass** bei abgesenkter bzw. zum Fahrer hin ausgezogener Lenksäule (5) beide Teile (17, 18) des oberen Abdeckteils (15) unter einem Winkel α zueinander verlaufen und dass beide Teile (17, 18) durch das zumindest eine Zugelement (27) eine annähernd gestreckte Spannlage einnehmen.

## Claims

1. Flexible gap cover (14) between an adjustable steering column (5) of a motor vehicle and a dashboard (1), wherein the steering column (5) extends through a cutout (4) in the dashboard (1) and, adjacent to a steering wheel, is provided with a steering column lining (6), and the gap cover (14) is fastened at one side to the steering column lining (6) and at the other side to the dashboard (1), **characterized in that** the gap cover (14) comprises an upper cover part (15) and a lower cover part (16), **in that** the upper cover part (15) is composed of two parts (17, 18) which are arranged so as to be situated one above the other and which, in a common overlapping region (19), are sewed and/or adhesively bonded to one another, and **in that** at least one tension element (27) engages on the overlapping region (19) at the side facing away from the passenger compartment, the one end (28) of which tension element (27) is connected to the common overlapping region (19) of the two parts (17, 18), whereas the other end (29) of the tension element (27) is detachably connected to the free end (31) of an integrally formed retaining arm (30) of a bridge (22) which is fastened to the dashboard (1).

2. Flexible gap cover according to Claim 1, **characterized in that** the upper cover part (15) is fastened to the transversely-running bridge (22) of the dashboard (1) and to an upper shell (7) of the steering column lining (6).

3. Flexible gap cover according to Claim 1, **characterized in that** the lower cover part (16) is held in position on a lower shell (8) of the steering column lining (6) and on the dashboard lower part (34).

4. Flexible gap cover according to one of the preceding claims, **characterized in that** the at least one tension element (27) is formed by a flexible rubber band.

5. Flexible gap cover according to one of the preceding claims, **characterized in that** at least two tension elements (27), which are arranged with a spacing to one another as viewed in the transverse direction, engage on the upper cover part (15).

6. Flexible gap cover according to Claim 1, **characterized in that** the at least one retaining arm (30) is formed in one piece with the bridge (22).

7. Flexible gap cover according to one of the preceding claims, **characterized in that** each retaining arm (30) has, at its free end, a downwardly projecting, integrally formed hook (32) into which can be hooked an edge region, which is provided with an opening, of the tension element (27).

8. Flexible gap cover according to one of the preceding claims, **characterized in that,** when the steering column (5) is pivoted up and not extended, the two parts (17, 18) of the upper cover part (15) are situated directly one above the other in regions and are tautened by the at least one tension element (27).

9. Flexible gap cover according to one of the preceding claims, **characterized in that,** when the steering column (5) is lowered and pulled out in the direction of the driver, the two parts (17, 18) of the upper cover part (15) run at an angle α relative to one another, and **in that** the two parts (17, 18) assume a virtually stretched tautened position as a result of the at least one tension element (27).

## Revendications

1. Recouvrement flexible (14) de l'espace situé entre la colonne de direction réglable (5) d'un véhicule automobile et le tableau de bord (1), dans lequel la colonne de direction (5) traverse un évidement (4) dans le tableau de bord (1) et est pourvue d'un habillage de colonne de direction (6) à proximité d'un volant de direction et le recouvrement (14) de l'espace est fixé d'une part à l'habillage de la colonne de direction (6) et d'autre part au tableau de bord (1), **caractérisé en ce que** le recouvrement (14) de l'espace comprend une partie de recouvrement supérieure (15) et une partie de recouvrement inférieure (16), **en ce que** la partie de recouvrement supérieure (15) se compose de deux pièces (17, 18) disposées en contact l'une au-dessus de l'autre, qui sont soudées et/ou collées l'une à l'autre dans une zone de chevauchement commune (19) et **en ce qu'**au moins un élément de traction (27) est attaché à la zone de chevauchement (19) sur le côté opposé à l'habitacle, dont une extrémité (28) est reliée à la zone de chevauchement commune (19) des deux pièces (17), (18), tandis que l'autre extrémité (29) de l'élément de traction (27) est au contraire reliée de manière démontable à l'extrémité libre (31) d'un bras de retenue profilé (30) d'un pont (22) fixé au tableau de bord (1).

2. Recouvrement flexible de l'espace selon la revendication 1, **caractérisé en ce que** la partie de recouvrement supérieure (15) est fixée au pont transversal (22) du tableau de bord (1) et à une coquille supérieure (7) de l'habillage de colonne de direction (6).

3. Recouvrement flexible de l'espace selon la revendication 1, **caractérisé en ce que** la partie de recouvrement inférieure (16) est maintenue en position sur une coquille inférieure (8) de l'habillage de colonne de direction (6) et sur la partie inférieure (34) du tableau de bord.

4. Recouvrement flexible de l'espace selon l'une quelconque des revendications précédentes, **caractérisé en ce qu'**au moins un élément de traction (27) est formé par une bande de caoutchouc flexible.

5. Recouvrement flexible de l'espace selon l'une quelconque des revendications précédentes, **caractérisé en ce qu'**au moins deux éléments de traction (27), disposés à distance l'un de l'autre en direction transversale, sont attachés à la partie de recouvrement supérieure (15).

6. Recouvrement flexible de l'espace selon la revendication 1, **caractérisé en ce que** l'au moins un bras de retenue (30) est formé d'une pièce avec le pont (22).

7. Recouvrement flexible de l'espace selon l'une quelconque des revendications précédentes, **caractérisé en ce que** chaque bras de retenue (30) présente à son extrémité libre un crochet (32) façonné orienté vers le bas, dans lequel on peut accrocher une zone de bord de l'élément de traction (27) pourvue d'une ouverture.

8. Recouvrement flexible de l'espace selon l'une quelconque des revendications précédentes, **caractérisé en ce que,** dans la position relevée non étendue de la colonne de direction (5), les deux pièces (17, 18) de la partie de recouvrement supérieure (15) se trouvent localement directement l'une au-dessus de l'autre et sont serrées par l'au moins un élément de traction (27).

9. Recouvrement flexible de l'espace selon l'une quelconque des revendications précédentes, **caractérisé en ce que**, dans la position abaissée ou étendue en direction du conducteur de la colonne de direction (5), les deux pièces (17, 18) de la partie de recouvrement supérieure (15) forment un angle α entre elles et **en ce que** les deux pièces (17, 18) occupent une position de serrage étendue par l'au moins un élément de traction (27).
